## Europäisches Patentamt
## European Patent Office
## Office européen des brevets

(19)

(11) Veröffentlichungsnummer : **0 494 429 B1**

(12)

# EUROPÄISCHE PATENTSCHRIFT

(45) Veröffentlichungstag der Patentschrift :
**01.03.95 Patentblatt 95/09**

(51) Int. Cl.$^6$ : **H04L 25/30, H04L 27/14**

(21) Anmeldenummer : **91121940.0**

(22) Anmeldetag : **20.12.91**

(54) **Demodulationsverfahren mit Entscheidungsstufe für binäre Daten.**

(30) Priorität : **10.01.91 CH 51/91**

(43) Veröffentlichungstag der Anmeldung :
**15.07.92 Patentblatt 92/29**

(45) Bekanntmachung des Hinweises auf die
Patenterteilung :
**01.03.95 Patentblatt 95/09**

(84) Benannte Vertragsstaaten :
**BE CH DE ES FR GB IT LI NL SE**

(56) Entgegenhaltungen :
**DE-A- 2 852 374**

(56) Entgegenhaltungen :
**GB-A- 2 176 080**
**US-A- 4 163 209**
**IEEE TRANSACTIONS AND COMMUNICA-**
**TIONS, Band COM-34, Nr. 9, September**
**1986,Seiten 955-958, New York, US; T.**
**SCHAUB et al.: "Minimax noncoherent detec-**
**tionof BFSK signals in nonwhite gaussian noi-**
**se"**

(73) Patentinhaber : **Landis & Gyr Technology**
**Innovation AG**
**CH-6301 Zug (CH)**

(72) Erfinder : **Schaub, Thomas**
**Moosstrasse 16**
**CH-6330 Cham (CH)**

EP 0 494 429 B1

## Beschreibung

Die Erfindung bezieht sich auf ein Demodulationsverfahren für binäre Daten gemäss dem Oberbegriff des Anspruchs 1.

Das erfindungsgemässe Demodulationsverfahren wird in Empfängern verwendet vorzugsweise bei Übertragungen, bei denen das Rauschleistungsdichtespektrum $G[f]$ eines verwendeten Übertragungskanals in Funktion der Frequenz f nicht konstant und sein Verlauf den Empfängern auch nicht bekannt ist. Unter diesen Umständen ist es nicht möglich, zwei Frequenzen $f_0$ und $f_1$ eines Frequenzumtastverfahrens so zu wählen, dass die Rauschleistungsdichtespektren $G[f_0]$ und $G[f_1]$ des Übertragungskanals bei den Frequenzen $f_0$ und $f_1$ möglichst klein sind, d. h. dass zwei zu den Frequenzen $f_0$ und $f_1$ gehörende umgetastete Signale $s_0[t]$ und $s_1[t]$ des Frequenzumtastverfahrens, die beide je eine Funktion der Zeit t sind, möglichst wenig gestört werden. Es ist vielmehr damit zu rechnen, dass - falls die beiden Frequenzen $f_0$ und $f_1$, wie bei einem konventionellen Frequenzumtastverfahren üblich, nahe beieinander liegen - beide Signale $s_0[t]$ und $s_1[t]$ in einem stark gestörten Frequenzbereich liegen. Für solche Fälle wird in der Literatur, z. B. im Buch "Digital Communications and Spread Spectrum Systems", R. E. Ziemer und R. L. Peterson, Macmillan Publishing Company, New York, 1985, Seiten 327 bis 328, die Verwendung möglichst eines Spreizbandverfahrens ("Spread Spectrum"-Verfahrens) empfohlen. Letztere haben jedoch den Nachteil, dass deren Verwirklichung aufwendig ist.

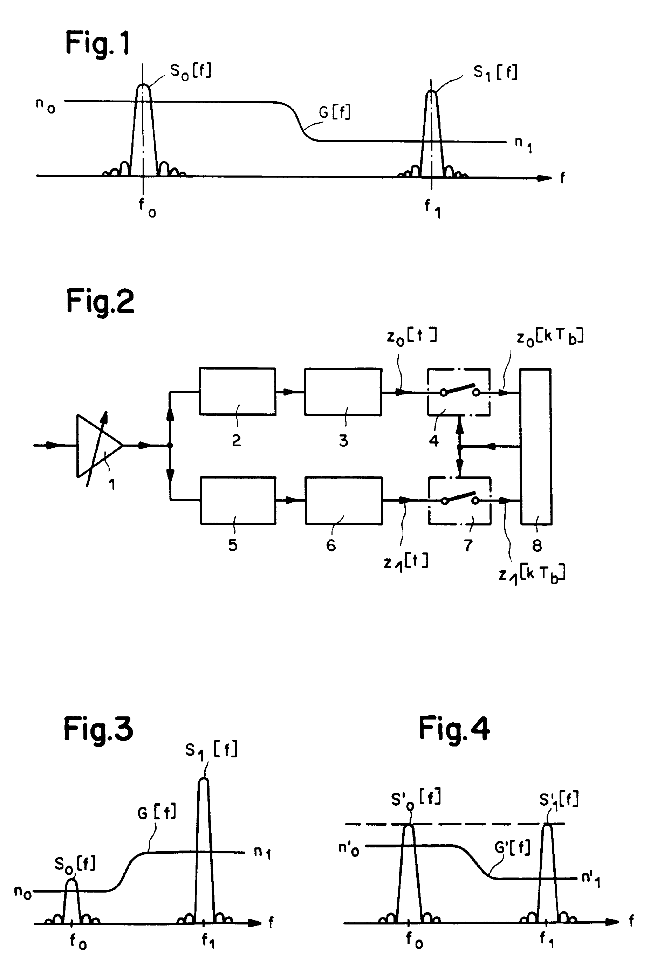

Ein Verfahren der eingangs genannten Art ist aus der Druckschrift IEEE Trans. on Communications, Sept. 86, Vol. COM-34, No 9, "Minimax Noncoherent Detection of BFSK Signals in Nonwhite Gaussian Noise", T. Schaub und B. Steinle, Seiten 955 bis 958, bekannt, in der gezeigt wird, dass, wenn $x = n_1/n_0$ unterschiedlich von Eins ist, mit $G[f_0] = n_0$ und $G[f_1] = n_1$ (siehe Fig. 1), ein konventioneller inkohärenter Frequenzumtastempfänger die gleichen Empfangsresultate liefert, wie wenn die beiden Signale $s_0[t]$ und $s_1[t]$ mit einer gleichen mittleren Rauschleistungsdichte $n = [n_0+n_1]/2$ gestört würden. Es wird dort auch eine Lösungsmöglichkeit gezeigt, wie für den Fall x unterschiedlich von Eins die Bitfehlerwahrscheinlichkeit $P_e$ der übertragenen binären Daten gegenüber dem Fall x gleich Eins verkleinert werden kann. Zu diesem Zweck werden zwei Gewichtungsfaktoren $\alpha$ und $\beta$ optimiert, mit denen die zwei umgetasteten Signale $s_0[t]$ und $s_1[t]$ multipliziert werden, nachdem sie zuerst vorher im Empfänger voneinander getrennt und amplitudendemoduliert wurden.

Der Erfindung liegt die Aufgabe zugrunde, das bekannte Demodulationsverfahren zu verbessern und ein Demodulationsverfahren zu verwirklichen, welches die Einfachheit des inkohärenten Demodulationsverfahrens mit den Vorteilen des Spreizbandverfahrens kombiniert.

Die genannte Aufgabe wird erfindungsgemäss durch die im Kennzeichen des Anspruchs 1 angegebenen Merkmale gelöst.

Vorteilhafte Ausgestaltungen der Erfindung ergeben sich aus den Unteransprüchen.

Ein Ausführungsbeispiel der Erfindung ist in der Zeichnung dargestellt und wird im folgenden näher beschrieben.

Es zeigen:

Fig. 1      ein Frequenzspektrum-Diagramm von Nutz- und Störsignalen,

Fig. 2      ein Blockschaltbild einer Anordnung zur Durchführung des erfindungsgemässen Demodulationsverfahrens,

Fig. 3      ein Frequenzspektrum-Diagramm von Stör- und gedämpften Nutzsignalen vor einem Schwundausgleich und

Fig. 4      ein Frequenzspektrum-Diagramm von Stör- und gedämpften Nutzsignalen nach einem Schwundausgleich.

Gleiche Bezugszahlen bezeichnen in allen Figuren der Zeichnung gleiche Teile.

Nachfolgend gilt die Annahme, dass binäre Daten mittels eines Frequenzumtastverfahrens übertragen werden über einen Uebertragungskanal, dessen Übertragungseigenschaften sich mit der Frequenz f ändern.

Die Übertragung erfolgt mittels eines sogenannten BFSK-Verfahrens ("Binary frequency shift keying"-Verfahrens), also eines Frequenzumtastverfahrens, in dem zwischen einem ersten sinusförmigen Signal $s_0[t]$ der Frequenz $f_0$ und einem zweiten sinusförmigen Signal $s_1[t]$ der Frequenz $f_1$ im Rhythmus der zu übertragenden binären Daten, d. h. im Rhythmus der zu übertragenden Bits, umgetastet wird, wobei beide Frequenzen $f_0$ und $f_1$ unterschiedlich sind. Dabei entspricht das erste sinusförmige Signal $s_0[t]$ z. B. einem Logikwert "0" und das zweite sinusförmige Signal $s_1[t]$ einem Logikwert "1".

Die beiden Signale $s_0[t]$ und $s_1[t]$ sind nur während einer oder mehrerer Bitdauer in Gestalt trägerfrequenter Impulse vorhanden und die Bandbreite ihres jeweiligen Frequenzspektrums $S_0[f]$ bzw. $S_1[f]$ ist begrenzt. Die Frequenzspektren $S_0[f]$ und $S_1[f]$ sind dabei jeweils symmetrisch zur Frequenz $f_0$ bzw. $f_1$ des ersten Signals $s_0[t]$ bzw. des zweiten Signals $s_1[t]$. Ein Rauschleistungsdichtespektrum $G[f]$ und je ein Frequenzspektrum $S_0[f]$ bzw. $S_1[f]$ der beiden Signale $s_0[t]$ und $s_1[t]$ sind in der Fig. 1 in Funktion der Frequenz f dargestellt. Letztere besitzen je ein Hauptband und Nebenbänder, wobei das Hauptband jeweils die Frequenz $f_0$ bzw. $f_1$ als Mittenfrequenz besitzt und alle Nebenbänder jeweils symmetrisch zur zugehörigen Frequenz $f_0$ bzw. $f_1$ verlaufen. Das Rauschleistungsdichtespektrum G[f] stellt additives nichtweisses Gausch'sches Rauschen dar.

In der Fig. 1 wurde aus Gründen der zeichnerischen Einfachheit angenommen, dass der gesamte Frequenzbereich nur aus einem ersten Frequenzbereich und einem zweiten Frequenzbereich besteht, in denen je ein konstantes Rauschleistungsdichtespektrum G[f] = $n_0$ bzw. G[f] = $n_1$ vorhanden ist, mit $n_1$ bedeutend kleiner als $n_0$. Im erfindungsgemässen Demodulationsverfahren werden die Werte der beiden Frequenzen $f_0$ und $f_1$ weit auseinanderliegend gewählt. In der Fig. 1 wurde als ein möglicher Fall, der Fall dargestellt, in dem das gesamte Frequenzspektrum $S_0$[f] des ersten Signals $s_0$[t] vollständig im ersten Frequenzbereich und dasjenige $S_1$[f] des zweiten Signals $s_1$[t] vollständig im zweiten Frequenzbereich enthalten ist. Die beiden Signale $s_0$[t] und $s_1$[t] werden dabei einzeln von dem additiven weissen Gausch'schen Rauschen gestört, welches bei den beiden Frequenzen $f_0$ und $f_1$ je eine unterschiedliche Rauschleistungsdichte $n_0$ bzw. $n_1$ besitzt. Die beiden Signale $s_0$[t] und $s_1$[t] werden somit bei der Übertragung unterschiedlich stark gestört. Das Verhältnis $n_1/n_0$ wird nachfolgend mit x bezeichnet. In der Fig. 1 wurde ausserdem angenommen, dass die beiden Signale $s_0$[t] und $s_1$[t] im Übertragungskanal gleich stark gedämpft werden, so dass die Amplituden von $S_0$[f] und $S_1$[f] annähernd gleich gross sind.

Es gelten:

$$s_0[t] \;=\; [E_b/2T_b]^{1/2}.\cos[2\pi f_0 t]$$

und

$$s_1[t] \;=\; [E_b/2T_b]^{1/2}.\cos[2\pi f_1 t],$$

wobei $E_b$ die Energie pro gesendetem Bit und $T_b$ die Bitdauer bezeichnet.

Für den Empfangsprozess wird in den Empfängern ein inkohärentes Demodulationsverfahren verwendet, da die Empfänger in der Regel die Phasenlage der gesendeten Signale $s_0$[t] und $s_1$[t] nicht kennen. Prinzipiell ist aber die Verwendung des erfindungsgemässen Demodulationsverfahrens auch bei einer kohärenten Demodulation möglich.

Für ein nachfolgendes Berechnungsbeispiel gelten folgende Annahmen:
- Der für die Übertragung zur Verfügung stehende Frequenzbereich besteht aus zwei gleich grossen Frequenzbereichen, in denen jeweils ein Störsignal mit einer Rauschleistungsdichte $n_0$ bzw. $n_1$ vorhanden ist.
- x = $n_1/n_0$ = -10dB, so dass der erste Frequenzbereich stark und der zweite Frequenzbereich schwach gestört ist.
- $E_b/n$ = $2E_b/[n_0+n_1]$ = 6dB, was einem
  $E_b/n_0$ = 3,4dB und einem
  $E_b/n_1$ = 13,4dB entspricht.
- Die Wahrscheinlichkeit für das Auftreten eines stark gestörten Bereichs ist 50% und die Wahrscheinlichkeit für das Auftreten eines schwach gestörten Bereichs ist ebenfalls 50%.

In einem konventionellen Frequenzumtastverfahren, bei dem die Frequenzen $f_0$ und $f_1$ möglichst nahe beieinander liegen, existiert sowohl eine 50%-Wahrscheinlichkeit, dass die Frequenzen $f_0$ und $f_1$ beide im ersten Frequenzbereich, als auch eine 50%-Wahrscheinlichkeit, dass sie im zweiten Frequenzbereich liegen. Dem entspricht bei der Verwendung eines inkohärenten Demodulationsverfahrens eine Bitfehlerwahrscheinlichkeit von

$$P_{e0} \;=\; 0{,}5.\exp[-0{,}5.E_b/n_0] \;=\; 0.167$$

im ersten Frequenzbereich und von

$$P_{e1} \;=\; 0{,}5.\exp[-0{,}5.E_b/n_1] \;=\; 8{,}8.10^{-6}$$

im zweiten Frequenzbereich, so dass mit 50%-Wahrscheinlichkeit keine sinnvolle Übertragung (siehe Wert von $P_{e0}$) und mit 50%-Wahrscheinlickeit eine sehr gute Übertragung (siehe Wert von $P_{e1}$) zustande kommt.

In dem erfindungsgemässen Verfahren werden dagegen die Frequenzen $f_0$ und $f_1$ möglichst zufällig und so weit auseinander liegend gewählt, dass folgende drei Möglichkeiten vorhanden sind:
- Es existiert eine 25%-Wahrscheinlichkeit, dass die Frequenzen $f_0$ und $f_1$ beide in einem schwach gestörten Frequenzbereich liegen. Dem entspricht eine Fehlerwahrscheinlichkeit von $P_{e1}$ = 8.8·$10^{-6}$.
- Es existiert eine 50%-Wahrscheinlichkeit, dass die Frequenzen $f_0$ und $f_1$ je in einem anderen Frequenzbereich liegen. Dem entspricht eine Fehlerwahrscheinlichkeit von $P_{e2}$ = 1,22.$10^{-3}$. Die genaue Berechnung von $P_{e2}$ wird nachfolgend noch erläutert als Berechnungsbeispiel der Gleichung IX.
- Es existiert eine 25%-Wahrscheinlichkeit, dass die Frequenzen $f_0$ und $f_1$ beide in einem stark gestörten Frequenzbereich liegen. Dem entspricht eine Fehlerwahrscheinlichkeit von $P_{e0}$ = 0.167.

Damit steigt die Wahrscheinlichkeit von 50% auf 75%, dass mindestens eine der beiden Frequenzen $f_0$ bzw. $f_1$ und damit auch mindestens eines der beiden Frequenzspektren $S_0$[f] bzw. $S_1$[f] der beiden Signale $s_0$[t] und $s_1$[t] in dem schwach gestörten Frequenzbereich liegt, so dass in diesem Fall eine gute Übertragung zustande kommt, während die Wahrscheinlichkeit für keine sinnvolle Übertragung auf 25% reduziert wird. Die Werte der Frequenzen $f_0$ und $f_1$ der beiden Signale $s_0[t]$ und $s_1[t]$ sind somit so weit auseinanderliegend zu wählen, dass die letzteren unabhängig voneinander gestört werden und dass möglichst mindestens eine der beiden Frequenzen $f_0$ und $f_1$ in einem schwach gestörten Frequenzbereich des Uebertragungskanals liegt.

Die in der Fig. 2 dargestellte Anordnung zur Durchführung des erfindungsgemässen Demodulationsverfahrens besteht aus einem fakultativ vorhandenen gemeinsamen Schwundausgleichsverstärker ("Automatic Gain Control Amplifier") 1, einem ersten Bandpassfilter 2 für das erste Signal $s_0[t]$ mit einem zugehörigen nachgeschalteten ersten Hüllkurvendetektor 3, dem ein zugehöriger erster Abtastschalter 4 nachgeschaltet ist, einem zweiten Bandpassfilter 5 für das zweite Signal $s_1[t]$ mit einem zugehörigen nachgeschalteten zweiten Hüllkurvendetektor 6, dem ein zugehöriger zweiter Abtastschalter 7 nachgeschaltet ist, sowie einer Rechnereinheit 8. Der Eingang der Anordnung oder, falls vorhanden, der Ausgang des gemeinsamen Schwundausgleichverstärkers 1 sind mit den Eingängen der beiden Bandpassfilter 2 und 5 verbunden, deren Ausgänge über den jeweils zugehörigen Hüllkurvendetektor 3 bzw. 6 auf den zugehörigen Abtastschalter 4 bzw. 7 geführt sind, deren Ausgänge ihrerseits je mit einem getrennten Eingang der gemeinsamen Rechnereinheit 8 verbunden sind. Ein Ausgang der letzteren ist ausserdem auf die beiden Steuereingänge der Abtastschalter 4 und 7 geführt. Die Mittenfrequenz des ersten Bandpassfilters 2 ist gleich der Frequenz $f_0$ des ersten Signals $s_0[t]$ und diejenige des zweiten Bandpassfilters 5 gleich der Frequenz $f_1$ des zweiten Signals $s_1[t]$. Das Bandpassfilter 2 und der Hüllkurvendetektor 3 sowie das Bandpassfilter 5 und der Hüllkurvendetektor 6 können dabei auch je durch einen an sich bekannten Quadraturdetektor ersetzt werden. Der Aufbau des Schwundausgleichsverstärkers 1 ist an sich bekannt und ist z. B. in dem Buch "Elements of Electronic Communications", 1978, J. J. Carr, Reston Publishing Company, Inc., Reston, Virginia, USA, Fig. 21.7, dargestellt.

Die zwei gesendeten und umgetasteten sinusförmigen Signale $s_0[t]$ und $s_1[t]$ werden nach ihrem Empfang im Empfänger zuerst mittels der Bandpassfilter 2 und 5 frequenzmässig voneinander getrennt und anschliessend jeweils im zugehörigen Hüllkurvendetektor 3 bzw. 6 getrennt amplitudendemoduliert, zwecks Erhalt am Ausgang der letzteren ein erstes Hüllkurvensignal $z_0[t]$ bzw. ein zweites Hüllkurvensignal $z_1[t]$. Jedes Hüllkurvensignal $z_0[t]$ bzw. $z_1[t]$ wird mittels des zugehörigen Abtastschalters 4 bzw. 7 einmal pro Bit in der Bitmitte abgetastet, zwecks Erhalt von Abtastwerten $z_0[kT_b]$ des ersten Hüllkurvensignals $z_0[t]$ und von Abtastwerten $z_1[kT_b]$ des zweiten Hüllkurvensignals $z_1[t]$ erzeugt werden, wobei k eine laufende Nummer der übertragenenen, in den Signalen $s_0[t]$ und $s_1[t]$ bzw. $z_0[t]$ und $z_1[t]$ enthaltenen Bits darstellt. Die Abtastwerte $z_0[kT_b]$ und $z_1[kT_b]$ werden der Rechnereinheit 8 zugeführt.

Zwecks Erstellung einer Wahrscheinlichkeitstabelle wird der Wertebereich, in dem die Abtastwerte $z_0[kT_b]$ und $z_1[kT_b]$ der beiden Hüllkurvensignale $z_0[t]$ und $z_1[t]$ liegen können, jeder für sich mittels Schwellwerte $w_{0,i}$ bzw. $w_{1,j}$ in mehreren, z. B. in $N_0$ bzw. $N_1$, Quantisierungsintervallen unterteilt, die entlang je einer von zwei Koordinatenachsen der Wahrscheinlichkeitstabelle aufgetragen werden zwecks Bildung von deren Tabellenfeldern i;j. Dabei gelten i = 0, 1, 2, ..., $N_0$ und j = 0, 1, 2, ..., $N_1$, mit $w_{0,0}$ = $w_{1,0}$ = 0 und $w_{0,N0}$ = $w_{1,N1}$ = unendlich.

Die Anzahl Quantisierungsintervalle $N_0$ und $N_1$ sind vorzugsweise gleich. Nachfolgend gilt die Annahme, dass $N_0$ = $N_1$ = 4. In diesem Fall gelten $w_{0,i}$ = $1,2.i.\sqrt{[n_0.B_T]}$ und $w_{1,j}$ = $1,2.j.\sqrt{[n_1.B_T]}$ für die Werte i und j von 1 bis $N_0-1$ bzw. von 1 bis $N_1-1$, wobei $B_T$ = $1/T_b$ die Bandbreite der im Empfänger enthaltenen Filter 2 und 5 bezeichnet.

Die Rechnereinheit 8 enthält einen Computer, vorzugsweise einen Mikrocomputer, in dessem Speicher die Werte einer Entscheidungstabelle fest abgespeichert sind. Die Werte der Entscheidungstabelle sind dabei von den Werten der Wahrscheinlichkeitstabelle abgeleitet, die z. B. folgendermassen aussieht, wenn $E_b/n$ = 6 dB und x = -10 dB.

$z_1[kT_b]$

|          | $w_{0,0}=0$       | $w_{0,1}$         | $w_{0,2}$         | $w_{0,3}$         |
|----------|-------------------|-------------------|-------------------|-------------------|
| $w_{1,3}$ | $1{,}66.10^{-4}$ / $5{,}13.10^{-1}$ | $6{,}47.10^{-4}$ / $4{,}30.10^{-1}$ | $5.78.10^{-4}$ / $5{,}46.10^{-2}$ | $1{,}42.10^{-4}$ / $1{,}53.10^{-3}$ |
| $w_{1,2}$ | $5{,}93.10^{-3}$ / $4{,}62.10^{-4}$ | $2{,}30.10^{-2}$ / $3{,}87.10^{-4}$ | $2{,}06.10^{-2}$ / $4{,}91.10^{-5}$ | $5{,}07.10^{-3}$ / $1{,}38.10^{-6}$ |
| $w_{1,1}$ | $4{,}67.10^{-2}$ / $3{,}67.10^{-6}$ | $1{,}82.10^{-1}$ / $3{,}08.10^{-6}$ | $1{,}62.10^{-1}$ / $3{,}91.10^{-7}$ | $4{,}00.10^{-2}$ / $1{,}11.10^{-8}$ |
| $w_{1,0}=0$ | $5{,}57.10^{-2}$ / $0$ | $2{,}16.10^{-1}$ / $0$ | $1{,}93.10^{-1}$ / $0$ | $4{,}77.10^{-2}$ / $0$ |

$z_0[kT_b]$

Dabei hat jedes Tabellenfeld i;j der Wahrscheinlichkeitstabelle folgenden Inhalt:

```
 _|_____|_
  |  P₀[i,j]  |
  |  P₁[i,j]  |
 _|_____|_
  |           |
```

In der Wahrscheinlichkeitstabelle sind die Quantisierungsintervalle der Abtastwerte $z_0[kT_b]$ und $z_1[kT_b]$ der beiden Hüllkurvensignale $z_0[t]$ und $z_1[t]$ entlang zwei senkrecht zueinander verlaufenden Koordinatenachsen aufgetragen, z. B. die Quantisierungsintervalle der Abtastwerte $z_0[kT_b]$ entlang der Abszisse und diejenigen der Abtastwerte $z_1[kT_b]$ entlang der Ordinate. Auf der Abszisse der Wahrscheinlichkeitstabelle sind die Schwellwerte $w_{0,0} = 0$, $w_{0,1}$, $w_{0,2}$ und $w_{0,3}$ der Abtastwerte $z_0[kT_b]$ und auf der Ordinate die Schwellwerte $w_{1,0} = 0$, $w_{1,1}$, $w_{1,2}$ und $w_{1,3}$ der Abtastwerte $z_1[kT_b]$ angeordnet.

Die Wahrscheinlichkeitstabelle besitzt $N_0.N_1 = 16$ Tabellenfelder i;j. Für jedes der Tabellenfelder i;j werden ein erster Wahrscheinlichkeitswert $P_0[i,j]$ und ein zweiter Wahrscheinlichkeitswert $P_1[i,j]$ berechnet und im betreffenden Tabellenfeld i;j angegeben. Der erste Wahrscheinlichkeitswert $P_0[i,j]$ steht z. B. in einer ersten Zeile und der zweite Wahrscheinlichkeitswert $P_1[i,j]$ z. B. in einer zweiten Zeile darunter. Dabei ist i der zweite Index desjenigen Schwellwertes $w_{0,i}$ der Abtastwerte $z_0[kT_b]$ und j der zweite Index desjenigen Schwellwertes $w_{1,j}$ der Abtastwerte $z_1[kT_b]$, die beide das Tabellenfeld i;j nach den unteren Werten hin begrenzen, während die oberen Grenzwerte i+1 und j+1 als Index besitzen. Z. B. wird das Tabellenfeld 2;3 nach unten hin durch die Schwellwerte $w_{0,2}$ und $w_{1,3}$ begrenzt. Der erste Wahrscheinlichkeitswert $P_0[i,j]$ ist die Wahrscheinlichkeit, dass die beiden Abtastwerte $z_0[kT_b]$ und $z_1[kT_b]$ der Hüllkurvensignale $z_0[t]$ und $z_1[t]$ im betreffenden Tabellenfeld i;j liegen, wenn das erste Signal $s_0[t]$ gesendet wurde, während der zweite Wahrscheinlichkeitswert $P_1[i,j]$ die Wahrscheinlichkeit ist, dass die beiden Abtastwerte $z_0[kT_b]$ und $z_1[kT_b]$ der Hüllkurvensignale $z_0[t]$ und $z_1[t]$ im betreffenden Tabellenfeld i;j liegen, wenn das zweite Signal $s_1[t]$ gesendet wurde.

Anders ausgedrückt:

$P_0[i,j]$ ist die Wahrscheinlickeit, dass sowohl $w_{0,i} \leqq z_0[kT_b] < w_{0,i+1}$ als auch $w_{1,j} \leqq z_1[kT_b] < w_{1,i+1}$, falls das erste Signal $s_0[t]$ gesendet wurde.

5

$P_1[i,j]$ ist dagegen die Wahrscheinlickeit, dass sowohl $w_{0,i} \leqq z_0[kT_b] < w_{0,i+1}$ als auch $w_{1,j} \leqq z_1[kT_b] < w_{1,j+1}$, falls das zweite Signal $s_1[t]$ gesendet wurde.

$P_0[i,j]$ und $P_1[i,j]$ sind somit die berechneten Wahrscheinlichkeiten, dass das Paar Abtastwerte $z_0[kT_b]$ und $z_1[kT_b]$ im Tabellenfeld [i;j] liegt, unter der Hypothese, dass das erste Signal $s_0[t]$ bzw. dass das zweite Signal $s_1[t]$ gesendet wurde.

Die Entscheidungstabelle, die von der Wahrscheinlichkeitstabelle abgeleitet ist, enthält für die verschiedenen Tabellenfelder i;j optimale Entscheide und besitzt z. B. folgendes Aussehen, wieder unter der Annahme, dass $E_b/n = 6$ dB und $x = -10$ dB.

$z_1[kT_b]$

```
        |
        |   "1"   |   "1"   |   "1"   |   "1"
        |_____|_____|_____|_____
 W₁,₃ __|
        |   "0"   |   "0"   |   "0"   |   "0"
        |_____|_____|_____|_____
 W₁,₂ __|
        |   "0"   |   "0"   |   "0"   |   "0"
        |_____|_____|_____|_____
 W₁,₁ __|
        |   "0"   |   "0"   |   "0"   |   "0"
 W₁,₀=0 _|_____|_____|_____|_____  z₀[kT_b]
        W₀,₀=0   W₀,₁      W₀,₂      W₀,₃
```

Die Entscheidungstabelle weist die gleichen Schwellwerte $w_{0,i}$ und $w_{1,j}$ sowie gleichviele $N_0.N_1$ Tabellenfelder i;j auf wie die Wahrscheinlichkeitstabelle und wird unter Verwendung des "Prinzips der grössten Wahrscheinlichkeit" ("Maximum-Likelihood Prinzip") für das ausgesendete Signal $s_0[t]$ bzw. $s_1[t]$ beim Empfang des Abtastpaares $z_0[kT_b];z_1[kT_b]$ erstellt. In einem Tabellenfeld i;j der Entscheidungstabelle wird jeweils ein erster, das erste Signal $s_0[t]$ darstellender Logikwert, z. B. "0", abgelegt, wenn der erste Wahrscheinlichkeitswert $P_0[i,j]$ grösser als der zweite Wahrscheinlichkeitswert $P_1[i,j]$ ist, und ein zweiter, das zweite Signal $s_1[t]$ darstellender Logikwert, z. B. "1", wenn der erste Wahrscheinlichkeitswert $P_0[i,j]$ kleiner oder gleich dem zweiten Wahrscheinlichkeitswert $P_1[i,j]$ ist. Der Logikwert "0" bedeutet dabei, dass am wahrscheinlichsten das erste Signal $s_0[t]$, und der Logikwert "1", dass am wahrscheinlichsten das zweite Signal $s_1[t]$ gesendet wurde.

Die Abtastwerte $z_0[kT_b]$ und $z_1[kT_b]$ der beiden Hüllkurvensignale $z_0[t]$ und $z_1[t]$ werden in der Rechnereinheit 8 dem Computer zugeführt, welcher ermittelt, in welchem Tabellenfeld i;j der Entscheidungstabelle die zugeführten Abtastwerte $z_0[kT_b]$ und $z_1[kT_b]$ liegen, worauf er anschliessend aus dem sich im betreffenden Tabellenfeld i;j enthaltenen Logikwert "0" bzw. "1" ableitet, ob das erste oder das zweite Signal $s_0[t]$ bzw. $s_1[t]$ am wahrscheinlichsten gesendet wurde und daher als empfangenes Signal zu gelten hat. Liegt z. B. $z_0[kT_b]$ zwischen dem Wert $w_{0,0} = 0$ und dem Wert $w_{0,1}$ und $z_1[kT_b]$ zwischen dem Wert $w_{1,1}$ und dem Wert $w_{1,2}$, dann lautet die optimale Entscheidung gemäss der dargestellten Entscheidungstabelle: Erstes Signal $s_0[t]$ wurde am wahrscheinlichsten gesendet, da für das betreffende Tabellenfeld i;j ein Logikwert "0" gilt. Liegt dagegen z. B. $z_1[kT]$ oberhalb des Wertes $w_{1,3}$, dann lautet die optimale Entscheidung der dargestellten Entscheidungstabelle: Zweites Signal $s_1[t]$ wurde am wahrscheinlichsten gesendet, da für das betreffende Tabellenfeld i;j ein Logikwert "1" gilt.

Die Neuartigkeit der erfindungsgemässen Anordnung besteht darin, dass die Abtastwerte $z_0[kT_b]$ und $z_1[kT_b]$ der Hüllkurvensignale $s_0[t]$ und $s_1[t]$ der beiden Hüllkurvendetektoren 3 und 6 nicht wie in einem konventionellen Demodulationsverfahren mittels eines Analog-Komparators miteinander verglichen werden, damit der Empfänger sich für dasjenige Signal $s_0[t]$ bzw. $s_1[t]$ als das am wahrscheinlichsten gesendete Signal entscheiden kann, dessen empfangene Hüllkurve die grössere Amplitude aufweist, sondern dass in der Rechnereinheit 8 abgeklärt wird, in welchem Tabellenfeld i;j der Entscheidungstabelle sich die Abtastwerte $z_0[kT_b]$ und $z_1[kT_b]$ befinden und dass davon ausgehend das für dieses Tabellenfeld i;j wahrscheinlichere Signal $s_0[t]$ bzw. $s_1[t]$ als dasjenige Signal gilt, welches gesendet wurde.

Zur Vereinfachung der Schreibweise und zur Verkürzung der nachfolgenden Gleichungen, wird nachfol-

6

gend $z_0[kT_b]$ durch $z_0$, $z_1[kT_b]$ durch $z_1$, $s_0[t]$ durch $s_0$ und $s_1[t]$ durch $s_1$ ersetzt.

Es gelten dann:

$$P_0[i,j] = \int_{W_{0,i}}^{W_{0,i+1}} \int_{W_{1,j}}^{W_{1,j+1}} f_{z_0,z_1/s_0}[z_0,z_1] \cdot dz_0 \cdot dz_1 \qquad (I)$$

$$P_1[i,j] = \int_{W_{0,i}}^{W_{0,i+1}} \int_{W_{1,j}}^{W_{1,j+1}} f_{z_0,z_1/s_1}[z_0,z_1] \cdot dz_0 \cdot dz_1 \qquad (II)$$

Da $z_0$ und $z_1$ statistisch unabhängig voneinander sind, gelten ausserdem:

$$P_0[i,j] = \int_{W_{0,i}}^{W_{0,i+1}} f_{z_0/s_0}[z_0] \cdot dz_0 \int_{W_{1,j}}^{W_{1,j+1}} f_{z_1/s_0}[z_1] \cdot dz_1 \qquad (III)$$

und

$$P_1[i,j] = \int_{W_{0,i}}^{W_{0,i+1}} f_{z_0/s_1}[z_0] \cdot dz_0 \int_{W_{1,j}}^{W_{1,j+1}} f_{z_1/s_1}[z_1] \cdot dz_1 \qquad (IV)$$

Dabei stellen die Funktionen $f_{z_0/s_0}[z_0]$, $f_{z_1/s_0}[z_1]$, $f_{z_0/s_1}[z_0]$ und $f_{z_1/s_1}[z_1]$ die Wahrscheinlichkeitsdichtefunktion ("probability density function") für $z_0$ bzw. $z_1$ dar unter der Hypothese, dass $s_0$ bzw. $S_1$ gesendet wurde.

Unter der Voraussetzung, dass die auf dem Übertragungskanal wirkenden Störer gaussverteilt sind und additiv wirksam sind, gelten folgende Gleichungen:

$$f_{z0/s0}[z_0] = [z_0/(n_0 \cdot B_T)] \cdot I_0[(A \cdot z_0)/(n_0 \cdot B_T)] \cdot \exp[-(z_0^2 + A^2)/(2n_0 \cdot B_T)] \quad (V),$$

$$f_{z0/s1}[z_0] = [z_0/(n_0 \cdot B_T)] \cdot \exp[-z_0^2/(2n_0 \cdot B_T)] \quad (VI),$$

$$f_{z1/s1}[z_1] = [z_1/(n_1 \cdot B_T)] \cdot I_0[(A \cdot z_1)/(n_1 \cdot B_T)] \cdot \exp[-(z_1^2 + A^2)/(2n_1 \cdot B_T)] \quad (VII)$$

und

$$f_{z1/s0}[z_0] = [z_1/(n_1 \cdot B_T)] \cdot \exp[-z_1^2/(2n_1 \cdot B_T)] \quad (VIII),$$

mit $z_0 > 0$ bzw. $z_1 > 0$. Dabei ist A die Amplitude des ungestörten Signals und $I_0[x]$ die modifizierte Besselfunktion nullter Ordnung.

Die Wahrscheinlichkeit, dass es im Empfänger zu einer falschen Detektion der Bitwerte kommt, entspricht der Wahrscheinlichkeit, dass die Abtastwerte $z_0$ und $z_1$ in einem Tabellenfeld i;j liegen, in das in der Entscheidungstabelle ein Logikwert "1" vorhanden ist, obwohl das erste Signal $s_0$ gesendet wurde, und dass sie in einem Tabellenfeld i;j liegen, in das in der Entscheidungstabelle ein Logikwert "0" vorhanden ist, obwohl das zweite Signal $s_1$ gesendet wurde.

$$P_e = 0,5 \cdot \sum_{j=0}^{N_1} \sum_{i=0}^{N_0} \{P_0[i,j], P_1[i,j]\}_{min} \qquad (IX)$$

Dabei bezeichnet $\{P_0[i,j], P_1[i,j]\}_{min}$ den kleinsten der beiden in einem Tabellenfeld i;j der Wahrscheinlichkeitstabelle enthaltenen Wahrscheinlichkeitswerte $P_0[i,j]$ bzw. $P_1[i,j]$. Der Wahrscheinlichkeitswert $P_e$ entspricht dem halben Summenwert aller dieser in sämtlichen Tabellenfeldern der Wahrscheinlichkeitstabelle enthaltenen kleinsten Wahrscheinlichkeitswerte.

Für $N_0 = N_1 = 4$ ergibt die oben dargestellte Wahrscheinlichkeitstabelle folgenden Wert für $P_e$:

$$1,66 \cdot 10^{-4} + 6,47 \cdot 10^{-4} + 5,78 \cdot 10^{-4} + 1,42 \cdot 10^{-4} + 4,62 \cdot 10^{-4} + 3,87 \cdot 10^{-4}$$
$$+ 4,91 \cdot 10^{-5} + 1,38 \cdot 10^{-6} + 3,67 \cdot 10^{-6} + 3,08 \cdot 10^{-6} + 3,91 \cdot 10^{-7} + 1,11 \cdot 10^{-8} = 1,22 \cdot 10^{-3} = P_{e2}.$$

Das erfindungsgemässe Demodulationsverfahren reduziert sich für Extremfälle, wie z. B. x annähernd gleich Eins oder x sehr viel grösser oder sehr viel kleiner als Eins, zu einem konventionellen Frequenzumtast (FSK)- oder zu einem konventionellen Amplitudentast (ASK: "Amplitude Shift Keying")- Demodulationsverfahren.

Für den Fall "x annähernd gleich Eins" gilt dann im Empfänger das Entscheidungskriterium: Erstes Signal $s_0[t]$ wurde gesendet, falls $z_0[kT_b] \geqq z_1[kT_b]$, bzw. zweites Signal $s_1[t]$ wurde gesendet, falls $z_0[kT_b] < z_1[kT_b]$.

Für den Fall "x viel kleiner als Eins" und damit "$n_1$ viel kleiner als $n_0$" gilt im Empfänger das Entscheidungskriterium: Zweites Signal $s_1[t]$ wurde gesendet, falls $z_1[kT_b] \geqq T_0$, und erstes Signal $s_0[t]$ wurde gesendet, falls $z_1[kT_b] < T_0$. In diesem Fall werden somit für die Entscheidung nur die Abtastwerte $z_1[kT_b]$ des schwach gestörten Signals verwendet.

Für den Fall "x viel grösser als Eins" und damit "$n_1$ viel grösser als $n_0$" gilt im Empfänger das Entscheidungskriterium: Erstes Signal $s_0[t]$ wurde gesendet, falls $z_0[kT_b] \geqq T_1$, und zweites Signal $s_1[t]$ wurde gesendet, falls $z_0[kT_b] < T_1$. In diesem Fall werden somit für die Entscheidung nur die Abtastwerte $z_0[kT_b]$ des schwach gestörten Signals verwendet.

Dabei sind $T_0$ und $T_1$ vorgegebene Schwellwerte, die vorzugsweise folgenden Wert aufweisen: $T_0 = T_1 = \sqrt{[E_b \cdot B_T)/2]}$

Wird bei der Übertragung ein fehlererkennender oder ein fehlerkorrigierender Code verwendet, dann ist der Rechnereinheit 8 eine fehlererkennende bzw. fehlerkorrigierde Anordnung nachgeschaltet, die möglicherweise sogenannte "Soft decisions" zulässt. Bei letzteren werden nicht nur die durch das Demodulationsverfahren ermittelte Logikwerte "1" und "0" allein, sondern auch die Wahrscheinlichkeiten berücksichtigt, mit denen diese ermittelten Logikwerte "1" und "0" mit den gesendeten Logikwerten übereinstimmen. In diesem Fall werden im Speicher der Rechnereinheit 8, allein oder in Ergänzung des Inhaltes der Entscheidungstabelle, der Inhalt einer Metriktabelle abgespeichert, z. B. vorzugsweise der Inhalt der Wahrscheinlichkeitstabelle, wobei die letztere die Wahrscheinlichkeiten in quantisierter oder in logarithmierter Form enthalten kann. Im letzteren Fall sind in der Wahrscheinlichkeitstabelle die logarithmischen Werte der Wahrscheinlichkeiten vorhanden. In diesen Fällen werden somit die in der Wahrscheinlichkeitstabelle enthaltenen Wahrscheinlichkeitswerte $(P_0[i,j], P_1[i,j])$ oder die Logarithmen der in der Wahrscheinlichkeitstabelle enthaltenen Wahrscheinlichkeitswerte $(P_0[i,j], P_1[i,j])$ im Speicher der Rechnereinheit 8 gespeichert zwecks ihrer Berücksichtigung bei der Ermittlung des am wahrscheinichsten gesendeten Signals $s_0[t]$ bzw. $s_1[t]$.

Die Anwendung des erfindungsgemässen Demodulationsverfahrens beschränkt sich nicht nur auf Übertragungskanäle, in denen die beiden Signale $s_0[t]$ und $s_1[t]$ gleichstark gedämpft werden, sondern es lässt sich auch in jenen Fällen verwenden, in denen die beiden Signale $s_0[t]$ und $s_1[t]$ durch den Übertragungskanal unterschiedlich stark gedämpft werden, z. B. je mit einem Dämpfungsfaktor $a_0$ bzw. $a_1$. In diesem Fall ist dann der Schwundausgleichsverstärker 1 zu verwenden. Letzterer verstärkt bzw. dämpft die beiden empfangenen Signale $a_0 \cdot s_0[t] + n_0[t]$ und $a_1 \cdot s_1[t] + n_1[t]$ automatisch so, dass die Nutzsignalanteile $A \cdot s_0[t]$ und $A \cdot s_1[t]$ im Ausgangssignal $s_0'[t] = A \cdot s_0[t] + (A/a_0) \cdot n_0[t]$ bzw. $s_1'[t] = A \cdot s_1[t] + (A/a_1) \cdot n_1[t]$ des Schwundausgleichsverstärkers 1 gleich gross werden. Dabei stellen $n_0[t]$ und $n_1[t]$ die im Empfänger vor dem Schwundausgleich bei den Frequenzen $f_0$ und $f_1$ unterschiedlich stark vorhandenen Störsignale und A eine Proportionalitätskonstante dar. In der Fig. 3 und in der Fig. 4 ist je ein Diagramm der in einem Empfänger vor bzw. nach dem Schwundausgleich vorhandenen Frequenzspektren von Stör- und unterschiedlich stark gedämpften Nutzsignalen dargestellt. Vor dem Schwundausgleich ist z. B. das empfangene, im Übertragungskanal stark gedämpfte erste Signal $s_0[t]$ und damit auch dessen Frequenzspektrum $S_0[f]$ bedeutend schwächer als das empfangene zweite Signal $s_1[t]$ bzw. als dessen Frequenzspektrum $S_1[f]$. Ausserdem ist $n_0 < n_1$. Ansonsten entspricht die Fig. 3 der Fig. 1. Durch den Schwundausgleichverstärker 1 wird somit beim Empfang der unterschiedlich stark gedämpften Signale $s_0[t]$ und $s_1[t]$ vor deren frequenzmässigen Trennung am Eingang eines Empfängers das am stärksten gedämpfte Signal $s_0[t]$ so verstärkt und das am schwächsten gedämpfte Signal $s_1[t]$ so gedämpft, dass beide Signale $s_0[t]$ und $s_1[t]$ annähernd gleich gross werden bevor sie frequenzmässig mittels der Bandpassfilter 2 und 5 voneinander getrennt werden. Dabei wird das erste Signal $s_0[t]$ und das zugehörige Störsignal $n_0[t]$ verstärkt und gleichzeitig das zweite Signal $s_1[t]$ sowie das zugehörige Störsignal $n_1[t]$ gedämpft und zwar so, dass schliesslich die Nutzsignalanteile $A.s_0[t]$ und $A.s_1[t]$ im Ausgangssignal des Schwundausgleichsverstärkers 1 und damit auch die Amplituden von deren Frequenzspektren $S'_0[f]$ und $S'_1[f]$ wieder annähernd gleich gross werden. Die Rauschleistungsdichtespektren $n_0$ und $n_1$ der Störsignale $n_0[t]$ und $n_1[t]$ werden dabei gleichzeitig auf $n'_0$ verstärkt bzw. auf $n'_1$ gedämpft. Die Amplituden von $S'_0[f] = S'_1[f]$ liegen dann wertmässig zwischen den Amplituden von $S_0[f]$ und $S_1[f]$. Wie aus der Fig. 4 ersichtlich, ergibt sich damit wieder eine Ausgangslage, die gleich der in der Fig. 1 dargestellten Lage ist, in der gleiche Nutzsignalstärken und unterschiedliche Störleistungsdichten vorhanden sind, mit diesmal $n'_0 > n'_1$.

## Patentansprüche

1. Demodulationsverfahren für binäre Daten, die mittels eines Frequenzumtastverfahrens über einen Uebertragungskanal übertragen werden, wobei zwei umgetastete und unterschiedliche Frequenzen ($f_0$, $f_1$) aufweisende gesendete sinusförmige Signale ($s_0[t]$, $s_1[t]$) nach ihrem Empfang zuerst frequenzmässig voneinander getrennt und dann getrennt amplitudendemoduliert werden zwecks Erhalt zweier Hüllkurvensignale ($z_0[t]$, $z_1[t]$), dadurch gekennzeichnet, dass die Werte der Frequenzen ($f_0$, $f_1$) der beiden Signale ($s_0[t]$, $s_1[t]$) so weit auseinanderliegend gewählt werden, dass die letzteren unabhängig voneinander gestört werden und dass möglichst mindestens eine der beiden Frequenzen ($f_0$, $f_1$) in einem schwach gestörten Frequenzbereich des Übertragungskanals liegt, dass die beiden Hüllkurvensignale ($z_0[t]$, $z_1[t]$) einmal pro Bit abgetastet werden zwecks Erhalt von deren Abtastwerten ($z_0[kT_b]$, $z_1[kT_b]$), dass die Abtastwerte ($z_0[kT_b]$, $z_1[kT_b]$) einer Rechnereinheit (8) zugeführt werden, in derem Speicher Werte einer Entscheidungstabelle abgespeichert sind, die von den Werten einer Wahrscheinlichkeitstabelle abgeleitet sind, dass zwecks Erstellung der Wahrscheinlichkeitstabelle der Wertebereich der Abtastwerte ($z_0[kT_b]$ bzw. $z_1[kT_b]$) eines jeden Hüllkurvensignals ($z_0[t]$ bzw. $z_1[t]$) jeder für sich mittels Schwellwerte ($w_{0,i}$ mit $i=0,1,2,...,N_0$ bzw. $w_{1,j}$ mit $j=0,1,2,...,N_1$) in mehreren ($N_0$ bzw. $N_1$) Quantisierungsintervallen unterteilt wird, die entlang je einer von zwei Koordinatenachsen der Wahrscheinlichkeitstabelle aufgetragen werden zwecks Bildung von deren Tabellenfeldern (i;j), dass für jedes Tabellenfeld (i;j) der Wahrscheinlichkeitstabelle ein erster Wahrscheinlichkeitswert ($P_0[i,j]$) und ein zweiter Wahrscheinlichkeitswert ($P_1[i,j]$) berechnet und im betreffenden Tabellenfeld (i;j) angegeben werden, wobei der erste Wahrscheinlichkeitswert ($P_0[i,j]$) die Wahrscheinlichkeit ist, dass die Abtastwerte ($z_0[kT_b]$, $z_1[kT_b]$) im betreffenden Tabellenfeld (i;j) liegen, wenn das erste Signal ($s_0[t]$) gesendet wurde, und der zweite Wahrscheinlichkeitswert ($P_1[i,j]$) die Wahrscheinlichkeit ist, dass die Abtastwerte ($z_0[kT_b]$, $z_1[kT_b]$) im betreffenden Tabellenfeld (i;j) liegen, wenn das zweite Signal ($s_1[t]$) gesendet wurde, dass in einem Tabellenfeld (i;j) der Entscheidungstabelle, die die gleichen Schwellwerte ($w_{0,i}$, $w_{1,j}$) sowie gleichviele ($N_0.N_1$) Tabellenfelder (i;j) aufweist wie die Wahrscheinlichkeitstabelle, jeweils ein erster, das erste Signal ($s_0[t]$) darstellender Logikwert ("0") abgelegt wird, wenn der erste Wahrscheinlichkeitswert ($P_0[i,j]$) grösser als der zweite Wahrscheinlichkeitswert ($P_1[i,j]$) ist, und ein zweiter, das zweite Signal ($s_1[t]$) darstellender Logikwert ("1") abgelegt wird, wenn der erste Wahrscheinlichkeitswert $P_0[i,j]$) kleiner oder gleich dem zweiten Wahrscheinlichkeitswert ($P_1[i,j]$) ist, und dass in der Rechnereinheit (8) ermittelt wird, in welchem Tabellenfeld (i;j) der Entscheidungstabelle die zugeführten Abtastwerte ($z_0[kT_b]$, $z_1[kT_b]$) liegen, worauf anschliessend aus dem im betreffenden Tabellenfeld (i;j) der Entscheidungstabelle enthaltenen Logikwert ("0" bzw. "1") abgeleitet wird, ob das erste oder das zweite Signal ($s_0[t]$ bzw. $s_1[t]$) am wahrscheinlichsten gesendet wurde und daher als empfangenes Signal zu gelten hat.

2. Demodulationsverfahren nach Anspruch 1, dadurch gekennzeichnet, dass zum Empfang unterschiedlich stark gedämpfter Signale ($s_0[t]$, $s_1[t]$) vor deren frequenzmässigen Trennung am Eingang eines Empfängers das am stärksten gedämpfte Signal ($s_0[t]$) so verstärkt und das am schwächsten gedämpfte Signal ($s_1[t]$) so gedämpft wird, dass beide Signale ($s_0[t]$, $s_1[t]$) annähernd gleich gross werden bevor sie frequenzmässig voneinander getrennt werden.

3.  Demodulationsverfahren nach Anspruch 1 oder 2, dadurch gekennzeichnet, dass die in der Wahrschein-lichkeitstabelle enthaltenen Wahrscheinlichkeitswerte ($P_0[i,j]$, $P_1[i,j]$) im Speicher der Rechnereinheit (8) gespeichert werden zwecks ihrer Berücksichtigung bei der Ermittlung des am wahrscheinichsten gesen-deten Signals ($s_0[t]$ bzw. $s_1[t]$).

4.  Demodulationsverfahren nach Anspruch 1 oder 2, dadurch gekennzeichnet, dass die Logarithmen der in der Wahrscheinlichkeitstabelle enthaltenen Wahrscheinlichkeitswerte ($P_0[i,j]$, $P_1[i,j]$) im Speicher der Rechnereinheit (8) gespeichert werden zwecks ihrer Berücksichtigung bei der Ermittlung des am wahrscheinichsten gesendeten Signals ($s_0[t]$ bzw. $s_1[t]$).

## Claims

1.  A demodulation process for binary data which are transmitted by means of a frequency shift keying process by way of a transmission channel, wherein two shifted transmitted sinusoidal signals ($s_0[t]$, $s_1[t]$) of different frequencies ($f_0$, $f_1$), after reception, are first separated from each other in terms of frequency and then separately amplitude-modulated for the purposes of producing two envelope curve signals ($z_0[t]$, $z_1[t]$), characterised in that the values of the frequencies ($f_0$, $f_1$) of the two signals ($s_0[t]$, $s_1[t]$) are selected to be so far apart that the latter are disturbed independently of each other and that as far as possible at least one of the two frequencies ($f_0$, $f_1$) lies in a weakly disturbed frequency range of the transmission channel, that the two envelope curve signals ($z_0[t]$, $z_1[t]$) are sampled once per bit for the purposes of pro-ducing their sample values ($z_0[kT_b]$, $z_1[kT_b]$). that the sample values ($z_0[kT_b]$, $z_1[kT_b]$) are passed to a calculator unit (8) in whose memory values of a decision table are stored, which values are derived from the values of a probability table, that for the purposes of drawing up the probability table the value range of the sample values ($z_0[kT_b]$ and $z_1[kT_b]$) of each respective envelope curve signal ($z_0[t]$ and $z_1[t]$) is each in itself divided by means of threshold values ($w_{0,i}$ with i=0,1,2,..., $N_0$ and $w_{1,j}$ with j =0,1,2,..., $N_1$) into a plurality ($N_0$ and $N_1$ respectively) of quantisation intervals which are plotted along respective ones of two coordinate axes of the probability table for the purposes of forming the table areas (i;j) thereof, that for each table area (i;j) of the probability table a first probability value ($P_0[i,j]$) and a second probability value ($P_1[i,j]$) is calculated and specified in the respective table area (i;j), wherein the first probability value ($P_0[i,j]$) is the probability that the sample values ($z_0[kT_b]$, $z_1[kT_b]$) lie in the respective table area (i;j) if the first signal ($s_0[t]$) were sent and the second probability value ($P_1[i,j]$) is the probability that the sample val-ues ($z_0[kT_b]$, $z_1[kT_b]$) lie in the respective table area (i;j) if the second signal (s1[t]) were sent, that a first logic value ("0") representing the first signal ($s_0[t]$) is set down in a table area (i;j) of the decision table which has the same threshold values ($W_{0,i}$, $w_{1,j}$) and as many ($N_0$.$N_1$) table areas (i;j) as the probability table if the first probability value ($P_0[i,j]$) is greater than the second probability value ($P_1[i,j]$), and a second logic value ("1") representing the second signal ($s_1$([t]) is set down if the first probability value ($P_0[i,j]$) is less than or equal to the second probability value ($P_1[i,j]$), and that the calculator unit (8) ascertains in which table area (i;j) of the decision table the supplied sample values ($z_0[kT_b]$, $z_1[kT_b]$) lie, whereupon it is then deduced from the logic value ("0" or "1") contained in the respective table area (i;j) of the decision table whether the first or the second signal ($s_0[t]$ or $s_1[t]$) was most probably sent and is therefore to be considered as the received signal.

2.  A demodulation process according to claim 1 characterised in that for the reception of signals ($s_0[t]$, $s_1[t]$) which are attenuated to different degrees, prior to the separation thereof in terms of frequency at the input of a receiver the most heavily attenuated signal ($s_0[t]$) is so amplified and the most weakly attenuated signal ($s_1[t]$) is so attenuated that both signals ($s_0[t]$, $s_1[t]$) become at least approximately equal before they are separated from each other in respect of frequency.

3.  A demodulation process. according to claim 1 or claim 2 characterised in that the probability values ($P_0[i,j]$, $P_1[i,j]$) contained in the probability table are stored in the memory of the calculator unit (8) in order for them to be taken into account in ascertainingthe signal ($s_0[t]$ or $s_1[t]$) which was most probably sent.

4.  A demodulation process according to claim 1 or claim 2 characterised in that the logarithms of the prob-ability values [$P_0[i,j]$, $P_1[i,j]$) contained in the probability table are stored in the memory of the calculator unit (8) in order for them to be taken into account in ascertaining the signal ($s_0[t]$ or $s_1[t]$) which was most probably sent.

**Revendications**

1. Procédé de démodulation pour des données binaires, qui sont transmises au moyen d'un procédé de déplacement de fréquence par l'intermédiaire d'un canal de transmission, selon lequel deux signaux sinusoïdaux émis ($f_0[t]$, $f_1[t]$), possédant des fréquences déplacées et différentes ($f_0$, $f_1$), sont tout d'abord séparés l'un de l'autre, du point de vue des fréquences, après leur réception et sont ensuite modulés en amplitude d'une manière séparée, pour l'obtention de deux signaux de courbe enveloppe ($z_0[t]$, $z_1[t]$), caractérisé en ce que les valeurs des fréquences ($f_0$, $f_1$) des deux signaux ($s_0[t]$, $s_1[t]$) sont choisies suffisamment éloignées l'une de l'autre pour que les fréquences soient perturbées d'une manière indépendante l'une de l'autre, et que autant que possible au moins l'une des deux fréquences ($f_0$, $f_1$) est située dans une gamme faiblement perturbée de fréquences du signal de transmission, que les deux signaux de courbe enveloppe ($z_0[t]$, $z_1[t]$) sont échantillonnés une fois par bit pour l'obtention de leurs valeurs d'échantillonnage ($z_0[kT_b]$, $z_1[kT_b]$), que les valeurs d'échantillonnage ($z_0[kT_b]$, $z_1[kT_b]$ sont envoyées à une unité formant calculateur (8), dans la mémoire de laquelle sont mémorisées des valeurs d'une table de décision, qui sont dérivées des valeurs d'une table de probabilité, que pour l'établissement de la table de probabilité, la gamme des valeurs d'échantillonnage ($z_0[kT_b]$ ou $z_1[kT_b]$) de chaque signal de courbe enveloppe ($z_0[t]$ ou $z_1[t]$) est subdivisée, pour chaque signal, au moyen de valeurs de seuil ($w_{0,i}$, avec $i=0,1,2...,N_0$ ou $w_{1,j}$, avec $j=0,1,2,...N_1$) en plusieurs ($N_0$ ou $N_1$) intervalles de quantification, qui sont portés le long respectivement de l'un de deux axes de coordonnées de la table de probabilité, pour la formation de zones (i;j) de cette table, qu'une première valeur de probabilité ($P0[i,j]$) et une seconde valeur de probabilité ($P1[i,j]$) sont calculées pour chaque zone (i;j) de la table de probabilité, et sont indiquées dans la zone considérée (i;j) de la table, la première valeur de probabilité ($P0[i,j]$) étant la probabilité pour que les valeurs d'échantillonnage ($z_0[kT_b]$, $z_1[kT_b]$) soient situées dans la zone considérée (i;j) de la table, lorsque le premier signal ($s_0[t]$) a été émis, et la seconde valeur de probabilité ($P_1[i,j]$) est la probabilité pour que les valeurs d'échantillonnage ($z_0[kT_b]$, $z_1[kTb]$) soient situées dans la zone considérée (i;j) de la table lorsque le second signal ($s_1[t]$) a été émis, que respectivement une première valeur logique ("0"), qui représente le premier signal ($s_0[t]$) est mémorisée dans une zone (i;j) de la table de décision, qui possède les mêmes valeurs de seuil ($w_{0,i}$, $W_{1,j}$) ainsi qu'un nombre aussi élevé ($N_0.N_1$) de zones (i;j) que la table de probabilité, lorsque la première valeur de probabilité ($P_0[i,j]$) est supérieure à la seconde valeur de probabilité ($P_1[i,j]$), et une seconde valeur logique ("1") représentant le second signal ($s_1[t]$) est mémorisée lorsque la première valeur de probabilité ($P_1[i,j]$) est inférieure ou égale à la seconde valeur de probabilité ($P_1[i,j]$), et qu'une détermination est faite dans l'unité formant calculateur (8) pour savoir dans quelle zone (i;j) de la table de décision sont situées les valeurs d'échantillonnage envoyées ($z_0[kT_b]$, $z_1[kT_b]$), à la suite de quoi une détermination est alors faite, à partir de la valeur logique ("0" ou "1") contenue dans la zone considérée (i;j) de la table de décision, pour savoir si le premier ou le second signal ($s_0[t]$ ou $s_1[t]$) a été émis de la manière la plus probable et doit par conséquent être considéré comme le signal reçu.

2. Procédé de démodulation selon la revendication 1, caractérisé en ce que pour la réception de signaux ($s_0[t]$, $s_1[t]$), affaiblis différemment, avant leur séparation en rapport avec les fréquences, à l'entrée d'un récepteur le signal ($s_0[t]$) le plus fortement affaibli est amplifié et le signal ($s_1[t]$) le plus légèrement affaibli est affaibli de sorte que les deux signaux ($s_0[t]$, $s_1[t]$) deviennent approximativement identiques avant qu'ils soient séparés l'un de l'autre en rapport avec les fréquences.

3. Procédé de démodulation selon la revendication 1 ou 2, caractérisé en ce que les valeurs de probabilité ($P_0[i,j]$, $P_1[i,j]$) contenues dans la table de probabilité sont mémorisées dans la mémoire de l'unité formant calculateur (8) afin d'être prises en compte lors de la détermination du signal ($s_0[t]$ ou $s_1[t]$), qui est émis de la façon la plus probable.

4. Procédé de démodulation selon la revendication 1 ou 2, caractérisé en ce que les logarithmes des valeurs de probabilité ($P_0[i,j]$, $P_1[i,j]$) contenus dans la table de probabilité sont mémorisés dans la mémoire de l'unité formant calculateur (8), pour leur prise en compte lors de la détermination du signal ($s_0[t]$ ou $s_1[t]$) émis de la façon la plus probable.

# Fig.1

# Fig.2

# Fig.3

# Fig.4